# FASCICULE DE BREVET EUROPEEN

(11) **EP 1 517 781 B1**
(45) Date de publication et mention de la délivrance du brevet: **04.04.2007**
(21) Numéro de dépôt: 03755953.1
(22) Date de dépôt: 28.05.2003
(51) Int. Cl.: B29D 30/16, B29C 47/92

(54) **APPAREIL DE FABRICATION D UNE STRUCTURE DE RENFORCEMENT POUR PNEUMATIQUE, COMPRENANT UN MECANISME DE RETOURNEMENT DE LA BANDELETTE**
VORRICHTUNG ZUR HERSTELLUNG EINER VERSTÄRKUNGSSTRUKTUR FÜR EINEN REIFEN MIT EINEM WULSTFAHNENDREHMECHANISMUS
DEVICE FOR PRODUCING A REINFORCING STRUCTURE FOR A TYRE, COMPRISING A STRIP TURNING MECHANISM

(30) Priorité: 03.06.2002 FR 0206823
(43) Date de publication de la demande: 30.03.2005
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: PIALOT, Frédéric, F-63190 Moissat (FR)
(74) Mandataire: Bauvir, Jacques
(86) Numéro de dépôt international: PCT/EP2003/005624
(87) Numéro de publication internationale: WO 2003/101713

(56) Documents cités:
- EP-A- 0 557 615
- EP-A- 0 943 421
- EP-A- 0 956 940
- EP-A- 0 968 814
- GB-A- 987 983
- US-A- 5 221 406

## Description

La présente invention concerne la fabrication des pneumatiques. Plus précisément, elle se rapporte à la mise en place de fils pour constituer une structure de renforcement pour pneumatique. Plus particulièrement, elle propose des moyens aptes à fabriquer une telle structure de renforcement sur une forme proche ou identique de la forme de la cavité interne du pneumatique, c'est à dire une forme sensiblement toroïdale, supportant l'ébauche d'un pneumatique pendant sa fabrication.

Dans ce domaine technique, on connaît déjà des procédés et appareils qui permettent d'intégrer la fabrication des structures de renforcement de pneumatique à l'assemblage du pneumatique lui-même. Cela signifie que, plutôt que de recourir à des produits semi-finis, comme des nappes de renforcement, on réalise une ou des structures de renforcement in situ, au moment où l'on fabrique le pneumatique, et à partir d'une seule bobine de fil.

Parmi ces procédés et appareils, la solution décrite dans le brevet US 4 804 436 propose de réaliser des structures de renforcement à partir d'un seul fil. Cette solution permet notamment la réalisation d'une structure de renforcement sous la bande de roulement.

Il est également bien connu de réaliser une structure de renforcement pour pneumatique à partir d'une bandelette comportant des fils de renforcement parallèles entre eux et noyés dans une composition de caoutchouc ou autre élastomère. Une telle bandelette est découpée en tronçons et les tronçons sont déposés de façon adjacente sur un support de fabrication, là où l'architecture le commande, pour réaliser la structure de renforcement du pneumatique souhaité par le concepteur du pneumatique. Parmi les différentes variantes d'un procédé de fabrication à partir de bandelettes, on peut citer le brevet US 1 728 957 qui décrit une fabrication de bandelettes, puis une découpe de tronçons et un arrangement de bandelettes sur une forme de fabrication sensiblement toroïdale en veillant à conserver un pas aussi constant que possible entre les fils adjacents dans le tronçon.

Des appareils de ce type pour la fabrication d'une structure de renforcement de pneumatique sont aussi connus des documents EP 943421 et EP 956940.

La technique de fabrication de structures de renforcement à partir d'une bandelette n'a cependant pas trouvé beaucoup d'applications industrielles car, d'une part elle n'a pas la productivité d'une fabrication à partir de nappes, et d'autre part elle n'a pas la souplesse et la précision d'une technique de fabrication à partir d'un fil individuel. Lorsque l'on souhaite fabriquer un pneumatique selon une technique n'apportant que peu ou pas du tout de conformation du produit cru pendant sa fabrication, il est de première importance de pouvoir déposer les structures de renforcement et les produits en caoutchouc cru constituant le futur pneumatique avec une très grande précision aussi bien sur leur positionnement que sur la quantité de matière déposée sur la forme de fabrication.

L'objectif de la présente invention est de proposer un appareillage qui permettent la fabrication d'une structure de renforcement pour pneumatique par dépose sur une forme de fabrication, et ceci avec une très grande précision de pose, une très bonne efficacité, et par des moyens aussi simples que possibles, gages d'une très grande robustesse industrielle. Avantageusement, cette forme de fabrication est proche de la forme de la cavité interne du futur pneumatique.

L'invention propose un appareil de fabrication d'une structure de renforcement pour pneumatique, ladite structure de renforcement comportant des fils disposés sensiblement parallèlement les uns par rapport aux autres, ledit appareil étant destiné à être utilisé en coopération avec une forme sensiblement toroïdale sur laquelle on construit progressivement ladite structure de renforcement en déposant côte à côte des arceaux dudit fil selon une trajectoire souhaitée pour ledit fil à la surface de ladite forme, ledit appareil comprenant la combinaison des dispositifs selon la revendication 1. Des formes avantageuses de l'invention font l'objet des revendications dépendantes.

L'appareil soit peut prendre en compte une bandelette préfabriquée séparément, soit comporte les moyens de fabriquer in situ la bandelette. Dans ce dernier cas, dans une mise en oeuvre tout particulièrement avantageuse, mais non limitative, de l'invention, il est proposé de fabriquer la bandelette et de la déposer sur la forme avec contrôle volumétrique.

Notons tout d'abord que, dans le contexte du présent mémoire, le terme « fil » doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le fil soit pré revêtu d'un élastomère comme du caoutchouc ou non. On utilise le terme « bandelette » pour désigner un assemblage de plusieurs fils parallèles, réunis par une matrice de caoutchouc cru. On emploie le terme « tronçon » pour désigner un morceau de bandelette, créé par la coupe d'une certaine longueur de bandelette. Un tronçon de bandelette permet la dépose de plusieurs arceaux de fil. On appelle « arceau » une longueur limitée de fil, allant d'un point singulier à un autre dans le pneumatique en tant que produit fini, vulcanisé. On appelle « trajectoire » la trace exacte d'un arceau dans le pneumatique fini. Un ensemble d'arceaux disposés sur tout le pourtour du pneumatique forme une structure de renforcement. Un arceau, au sens défini ici, peut faire partie d'une carcasse, ou d'un renfort de sommet, ou de tout autre type de structure de renforcement.

Fondamentalement, l'invention traite de la dépose de tronçons successifs de bandelette de fils. Il importe peu que la structure de renforcement soit, pour être complète, fabriquée en plusieurs rotations successives de la forme ou non, ni que les tronçons successivement déposés le soient de façon adjacente ou au contraire avec un certain espace entre eux. La dépose de tronçons de bandelette sur la forme de fabrication se fait en fonction de la trajectoire recherchée. Dans le cas (particulier et non limitatif) d'une forme dont la surface extérieure définit la surface intérieure du pneu, limitant la cavité interne du pneu, la trajectoire de dépose d'un tronçon de bandelette se confond avec la trajectoire d'un arceau de fil dans le pneu.

Lorsque l'on définit des positions, des directions ou des sens avec les mots « radialement, axialement, circonférentiellement », ou lorsque l'on parle de rayons, on prend pour repère la forme sur laquelle on fabrique le pneumatique, ou le pneumatique par lui-même. L'axe géométrique de référence est l'axe de rotation de la forme.

Selon un aspect particulier de l'invention, la formation de la bandelette est effectuée à une position fixe dans l'espace, et la bandelette est ensuite amenée à une tête de pose dont au moins la sortie de pose est mobile par rapport à la forme ; on contrôle ladite quantité par unité de longueur en tenant compte de longueur bandelette accumulée entre la formation de la bandelette et la tête de pose.

Selon un autre aspect particulier de l'invention, la construction progressive de la structure de renforcement intervient alors que ladite forme est en rotation continue, en déplaçant la tête de pose dans un plan comprenant l'axe de rotation de la forme.

Selon une caractéristique particulière et non limitative de l'invention, pour réunir les fils au moyen d'une composition élastomérique, lesdits fils sont introduits en parallèle dans un assembleur comportant une chambre de formation à l'intérieur de laquelle ladite composition est refoulée, l'assembleur comportant un orifice de sortie pour la bandelette.

De préférence, la composition est refoulée au moyen d'une extrudeuse pilotée de façon à ce que la quantité de composition par unité de longueur de bandelette, la quantité de composition engagée à l'intérieur de la chambre de formation, soit fonction de la position occupée par ladite unité de longueur de bandelette pendant sa dépose sur la forme, compte tenu du mouvement de rotation de la forme pendant la dépose de ladite bandelette. Dans une mise en oeuvre particulière de l'invention, la composition est refoulée au moyen d'une extrudeuse volumétrique et dans lequel la quantité de ladite composition est contrôlée en commandant le volume extrudé par ladite extrudeuse de façon à ce que le volume de composition par unité de longueur de bandelette au cours de sa formation soit fonction du volume occupé par ladite unité de longueur de bandelette après sa dépose sur la forme.

La suite de la description permet de bien faire comprendre tous les aspects de l'invention, en s'appuyant sur les figures suivantes qui montrent un exemple particulier, et non limitatif, d'un appareil selon l'invention :
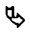 La figure 1 représente en perspective un appareil selon l'invention.
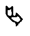 La figure 2 est une vue suivant la flèche B à la figure 1.
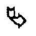 La figure 3 est un agrandissement montrant plus en détails l'organe visé par la référence 5 à la figure 1.
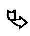 La figure 4 est une vue en perspective du même appareil que celui illustré par la figure 1 dans une autre phase de fonctionnement.
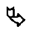 La figure 5 est une vue suivant la flèche C à la figure 4 .
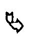 La figure 6 est un agrandissement montrant plus en détails l'organe visé par la référence 41 à la figure 1.

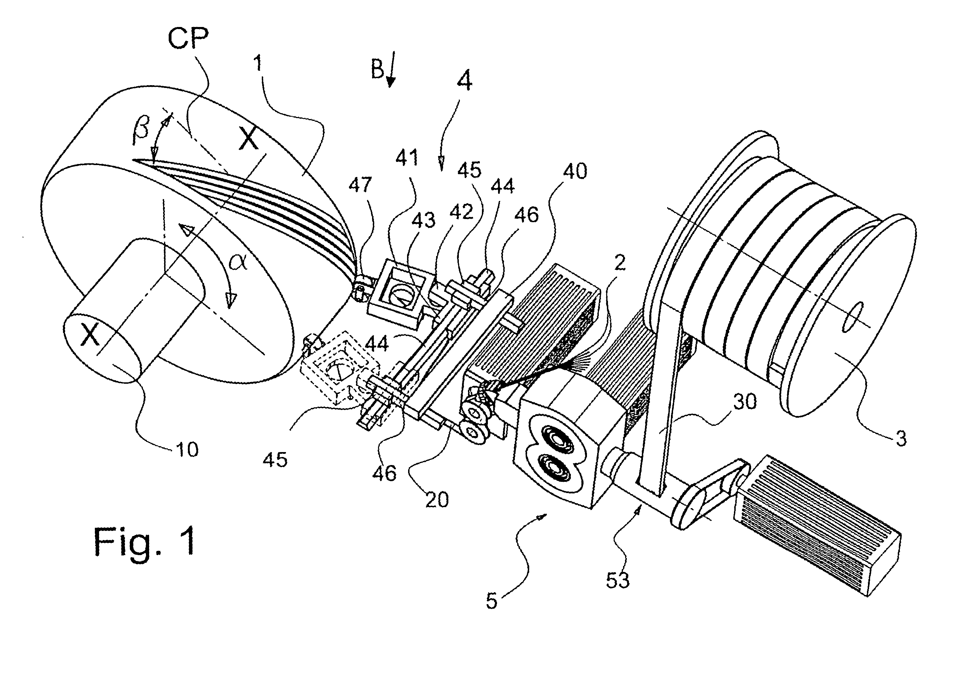

A la figure 1, on voit une forme 1 sur laquelle on dépose, successivement et dans l'ordre requis par l'architecture du pneumatique, tous les éléments constitutifs de celui-ci. Cette forme 1, sensiblement rigide, peut être par exemple un noyau métallique rigide en plusieurs pièces tel qu'on peut en trouver une description dans la demande de brevet EP 1075928.

Le fil 2 de renforcement utilisé est stocké en amont de l'installation, par exemple sur un ensemble de bobines, chacune montée sur un axe faisant partie d'une crémaillère permettant de stocker autant de bobines de fils qu'il y a de fils dans une bandelette. Un dispositif de déroulage de fils 2 (non représenté pour ne pas surcharger le dessin) permet d'entraîner les fils 2 afin de les amener à l'appareil de fabrication d'une structure de renforcement pour pneumatique. De préférence, le dispositif de déroulage de fils 2 comprend autant de moteurs qu'il y a de bobines, chaque moteur permettant d'entraîner un fil 2. Le dispositif de déroulage de fils 2 permet d'entraîner les fils 2 avec une tension bien maîtrisée, par exemple aussi faible que possible.

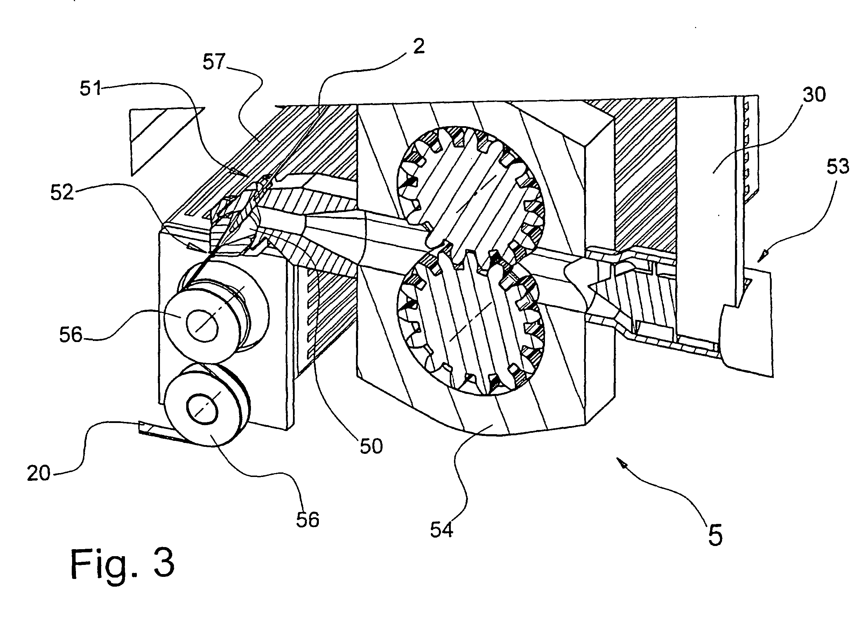

L'appareil proprement dit comporte essentiellement un assembleur 5 et une tête de pose 4. L'assembleur 5 comporte un orifice d'entrée 51 (voir figure 3 ) pour les fils 2. L'assembleur 5 comporte un orifice d'alimentation 53 permettant d'introduire un ruban 30 d'une composition de caoutchouc cru adaptée à l'usage de la bandelette dans le futur pneumatique. On voit également une bobine 3 sur laquelle est enroulée ledit ruban 30. Le ruban 30 est engagé dans l'orifice d'alimentation 53 de l'assembleur 5. L'assembleur 5 comporte un dispositif de refoulement 54, à caractère volumétrique.

Selon une caractéristique particulière et non limitative de la présente invention, on contrôle positivement la quantité de composition de caoutchouc permettant de fabriquer la bandelette en fonction de la position de la bandelette sur la forme. Dans le mode de réalisation décrit ici, cela se fait en utilisant une pompe mécaniquement volumétrique. Le dispositif de refoulement 54 est par exemple une pompe à engrenage, comme représenté, ou une pompe à pistons. On trouve la description d'une pompe à pistons dans le brevet US 5 655 891.

Le dispositif de refoulement 54 permet de refouler du caoutchouc cru 30 dans une chambre de formation 50 d'une bandelette 20. L'assembleur 5 comporte un orifice de sortie 52 pour la bandelette 20. L'assembleur 5 comporte deux galets 56 autour desquels la bandelette 20 est enroulée. Au moins un des galets 56 est entraîné en rotation par un moteur 57.

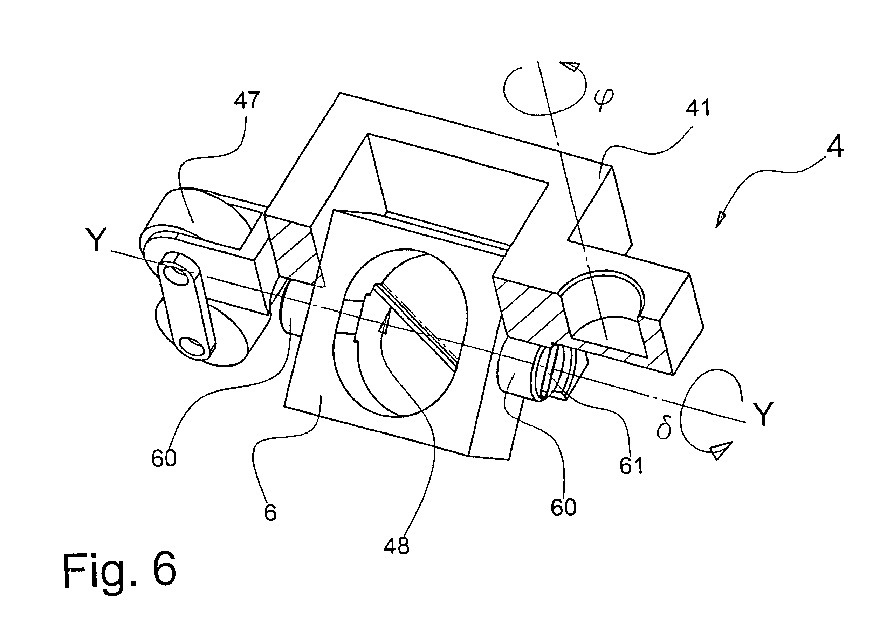

La tête de pose 4 est monté en regard de la forme 1. Elle comporte un bâti 40, sur lequel est monté un berceau 41 au moyen du mécanisme décrit ci-après. Le berceau 41 est monté via un pivot 42 sur un chariot 43. Grâce au pivot 42, le berceau 41 peut être orienté selon un angle ϕ visible à la figure 6 . La tête de pose 4 comporte également un dispositif de rouletage 49 comportant au moins un galet 47. Le dispositif de rouletage 49 peut être basculer autour de l'axe YY d'un angle δ. Le dispositif de rouletage 49 permettant d'appliquer la bandelette 20 avec une certaine pression sur la forme 1. Le chariot 43 est monté sur une glissière 44 sensiblement parallèle à l'axe de rotation XX de la forme 1. La glissière 44 est elle-même montée sur deux rails 46 parallèles entre eux, sensiblement perpendiculaires à ladite glissière 44, au moyen de deux coulisseaux 45.

Dans le berceau 41, un cadre 6 est monté sur deux paliers 60. Chacun des paliers 60 comporte une fente 61 centrée sur l'axe des paliers 60. La bandelette 20 peut cheminer au travers des fentes 61 qui organisent un couloir de guidage pour la bandelette 20. Le cadre 6 peut tourner d'au moins 180° par rapport au berceau 41. Le cadre 6 ainsi monté sur le berceau 41 forme un mécanisme de retournement est une réalisation particulière et non limitative d'un dispositif de dépose de ladite bandelette comportant un mécanisme de retournement de la bandelette permettant d'inverser la face de la bandelette qui est amenée au contact de la forme par la tête de pose.

Un organe de coupe 48 de la bandelette, tel qu'une guillotine (dont on voit la lame à la figure 6 , la contre-lame étant omise), est intégré au cadre 6, donc à la tête de pose 4.

La forme 1 est supportée par un porte-moyeu 10, comportant un moyeu auquel la forme 1 et attachée, et comportant la motorisation nécessaire permettant d'entraîner la forme 1 en rotation, à azimut α contrôlé à tout moment. Le bâti 40 est monté fixe par rapport au porte-moyeu 10, au moins pendant le fonctionnement de l'installation (on n'abordera pas ici les aspects d'approche et d'évacuation de la forme 1).

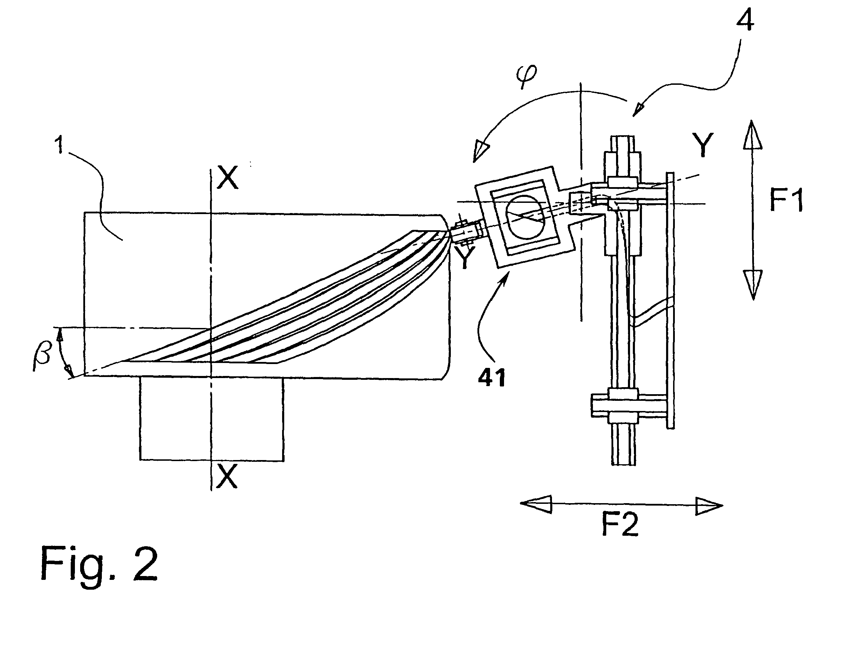

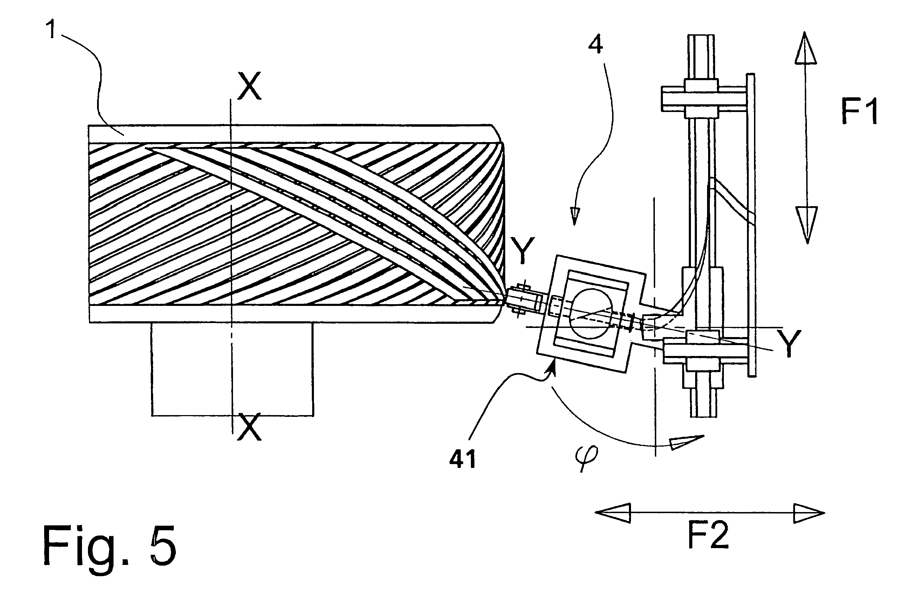

Le berceau 41 peut être présenté dans toutes les positions voulues par rapport à la forme 1 (voir figures 1, 2, 4 et 5). C'est à dire qu'il peut être déplacé radialement par rapport à la forme 1 (flèche F₂), peut coulisser transversalement par rapport à la forme 1 (flèche F₁), et peut être incliné autour de l'axe YY (angle δ) par rapport à la forme 1, et orienté selon l'angle ϕ. On peut donc présenter la bandelette 20 à la forme 1 dans toutes les positions souhaitables pour assurer, en combinaison avec la rotation de la forme 1, sa dépose selon toute trajectoire de dépose recherchée. Ainsi, on peut déposer la bandelette 20 selon tout angle β par rapport au plan méridien CP, pour former une structure de renforcement selon tout angle β, même variable.

On va maintenant décrire le fonctionnement de l'appareil selon l'invention.

Selon un aspect particulier de l'invention, l'appareil comporte une unité de contrôle du mouvement de rotation de la forme, du mouvement de la tête par rapport au bâti et du dispositif de refoulement, ladite unité étant configurée de façon à ce que la quantité (par exemple le poids), par unité de longueur de bandelette, de composition engagée à l'intérieur de la chambre par le dispositif de refoulement, soit fonction de la position occupée par ladite unité de longueur de bandelette après sa dépose sur la forme.

En particulier, l'appareil peut comporter une unité de contrôle du mouvement de rotation de la forme, du mouvement de la tête par rapport au bâti et du dispositif de refoulement, ladite unité étant configurée de façon à ce que le volume, par unité de longueur de bandelette, de composition engagé à l'intérieur de la chambre de gommage par le dispositif de refoulement, soit fonction du volume occupé par ladite unité de longueur de bandelette après sa dépose sur la forme.

On voit à la figure 1 que la tête de pose 41 se trouve au voisinage de l'épaule droite du futur pneumatique, dont on imagine bien la forme en examinant le noyau rigide 1 sur lequel on va le construire. L'extrémité libre de la bandelette, précédemment coupée en formant un angle β, est présentée à la surface de la forme et y est maintenue par le galet 47, à l'endroit voulu dans la zone d'épaule du futur pneumatique. Bien entendu, la matière contre laquelle on applique la bandelette 20 doit être telle que la bandelette 20 a tendance à rester collée. Typiquement, la forme est déjà revêtue de caoutchouc cru, collant naturellement avec la composition de caoutchouc cru 30.

La composition élastomérique est refoulée dans la chambre de formation 50, au moyen du dispositif de refoulement 54. Celui-ci permet d'introduire sous une certaine pression le caoutchouc cru à l'intérieur de la chambre de formation 50, de façon à ce que le caoutchouc la remplisse totalement. Pendant que l'ensemble des fils 2 traverse la chambre de formation 50, un volume de caoutchouc contrôlé est introduit dans la chambre de formation 50. Le paramètre de base pour les asservissements assurés par l'unité de contrôle est la rotation de la forme 1. Par ailleurs, les moyens d'animation de la tête de pose 4 par rapport à la forme 1, dont le fonctionnement est décrit ci-dessous, sont eux-mêmes pilotés de façon à réaliser une certaine trajectoire de dépose en fonction de l'architecture du pneu à fabriquer. On connaît donc à tout moment le rayon auquel la bandelette est déposée, ce qui permet compte tenu de la constitution de la bandelette, elle aussi déterminée par l'architecture du pneumatique, de calculer le volume déposé sur la forme. On connaît aussi le volume occupé par les fils de renforcement en eux-mêmes.

C'est à partir de la rotation de la forme 1, et compte tenu de sa géométrie connue et des mouvements de la tête de pose 41, et compte tenu de l'encours (stock de bandelette existant entre la chambre de formation 50 et l'endroit où la bandelette rejoint la forme 1), que l'unité de contrôle détermine donc le volume de caoutchouc à introduire dans la chambre de formation 50. En même temps, les fils 2 entraînent ce même volume de caoutchouc hors de la chambre de formation 50. Ainsi, la bandelette 20 apparaissant à l'orifice d'extrusion 52 comporte l'ensemble des fils 2 déroulés en parallèle et une quantité bien maîtrisée de caoutchouc d'imprégnation 30. La bandelette 20 est elle-même motorisée au moyen des galets 56 et du moteur 57 de façon à ce qu'elle soit entraînée hors de la chambre 50 avec une tension sensiblement constante.

On voit une zone de compensation, interposée entre l'assembleur 5 et le dispositif de pose 4, dans laquelle une certaine longueur (connue) de bandelette est accumulée. Cela permet d'assurer sans heurt le fonctionnement essentiellement continu de l'assembleur 5 et le fonctionnement essentiellement discontinu de la tête de pose 41, et permet donc de lisser la formation de bandelette par rapport aux variations de vitesse de la forme 1, dont on a dit ci-dessus qu'il s'agit d'un paramètre de base du pilotage assuré par l'unité de contrôle.

Afin de pouvoir éviter les effets néfastes de dérive du fonctionnement, il est avantageux de mesurer la longueur de bandelette réellement utilisée, indépendamment des paramètres d'asservissement qui calculent en permanence la longueur de bandelette à fabriquer. Un galet de mesure, de préférence indépendant du ou des galets 47 (non représenté) est équipé d'un codeur qui permet de connaître à tout moment et avec précision la longueur de bandelette déposée sur la forme 1. Ceci permet d'ajuster la fabrication de bandelette à la quantité de bandelette effectivement déposée sur la forme 1.

Le noyau 1 est entraîné en rotation (angle α) et le berceau 41 est mobile par rapport à la forme. Le berceau 41 est translaté de droite vers la gauche (flèche F₁) pour rejoindre la position où elle est dessinée en traits interrompus, tout ceci de façon synchrone. Pendant que le berceau 41 se déplace sur une largeur qui correspond à la largeur de la structure de renforcement fabriquée sous la bande de roulement du pneumatique, le noyau 1 est entraîné en rotation de façon à parcourir un arc α. Pendant ces mouvements, la bandelette 20 est appliquée sur la forme 1 par le galet de rouletage 47. Vers la fin de ces mouvements, la guillotine intégrée à la tête de pose sectionne la bandelette tout en respectant l'angle que l'on souhaite donner au bord de la bandelette. Cet angle correspond à l'angle que doit former le bord du tronçon suivant. Il n'y a donc aucune perte de matière entre deux tronçons successifs.

Afin de permettre le fonctionnement automatique, la bandelette est en permanence en prise dans la tête de pose 4. Un dispositif d'avance automatique (non représenté) de la bandelette après coupe permet que son extrémité libre soit à nouveau en prise avec le dispositif de rouletage 49 après la coupe, afin de pouvoir à nouveau être présentée à la forme 1 et pressée sur celle-ci.

De proche en proche, on dépose sur la forme le nombre voulu de tronçons de bandelette de façon par exemple adjacente, en recouvrant progressivement toute la périphérie de la forme de fabrication. De part la formation de la bandelette telle qu'elle est décrite ici, le pas entre tous les fils est constant dans la bandelette. Au final, on peut au choix s'arranger de façon à maintenir le même pas ou un pas différent entre les fils adjacents issus de deux bandelettes différentes.

L'opération de dépose des tronçons de bandelette 20 peut entraîner autant de tours complets de la forme qu'il y a de tronçons de bandelettes pour réaliser une structure de renforcement complète ou bien, dès que la tête de pose rejoint l'épaule gauche du futur pneumatique, elle peut être ramenée à l'épaule opposée sans interrompre la rotation de la forme 1 et un autre tronçon de bandelette peut être déposé dès que la tête de pose a rejoint l'épaule droite. Il suffit de s'arranger pour laisser un espace entre les deux tronçons posés correspondant à un nombre entier de tronçons qui seront installés au cours de rotations successives.

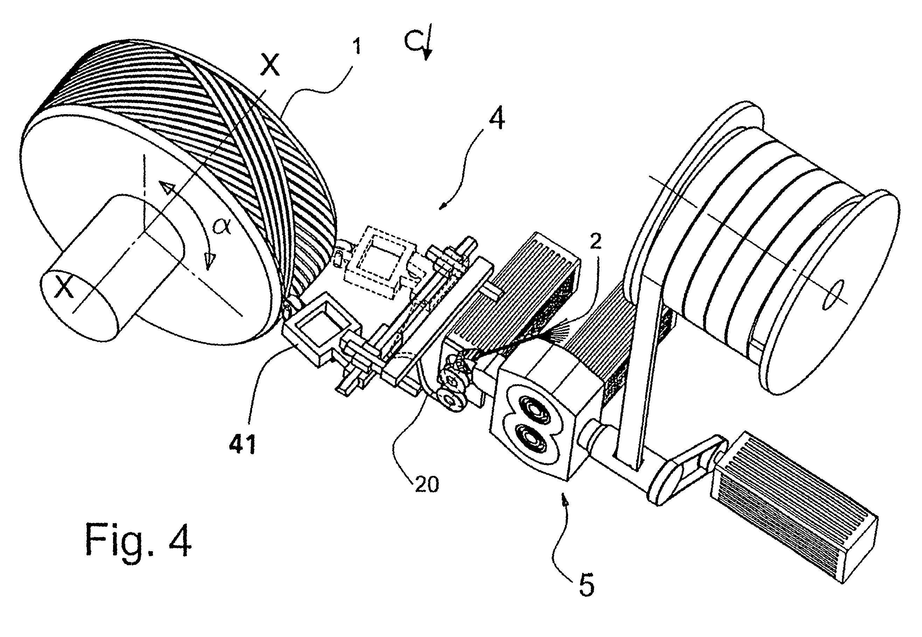

Pour passer d'une couche à la couche suivante (on appelle cela également pour passer d'une nappe à la nappe suivante), selon une caractéristique particulière mais avantageuse de la présente invention, un dispositif de retournement est intégré à la tête de pose. Il suffit de faire pivoter le cadre 6 de 180° et la bandelette 20 est prête à effectuer la dépose de la couche suivante. On reprend alors les mouvements exposés ci-dessus, à ceci près que l'on agit de gauche à droite au lieu de travailler de droite vers la gauche. C'est ce que l'on a représenté à la figure 4.

Dans une application particulière, l'invention permet de fabriquer une structure de renforcement comportant de multiples arceaux de fils obtenus en déposant des tronçons de bandelette créés par coupe de la bandelette. Dans un cas plus particulier encore, ladite structure de renforcement fait partie d'une ceinture située sous la bande de roulement.

L'invention permet de déposer les fils de renforcement par groupes formant une bandelette avec une précision de pose bien meilleure que ce que proposait l'état de la technique jusqu'à présent pour les techniques de fabrication à partir de bandelettes. Par ailleurs, grâce au dispositif de retournement de bandelette proposé par la présente invention, le passage d'une couche à une autre avec changement d'angle formé par les fils de renforcement peut se faire extrêmement rapidement, sans ralentir en aucune façon la cadence de fabrication d'un appareil selon l'invention, et sans perte de matière.

## Revendications

1. Appareil de fabrication d'une structure de renforcement pour pneumatique, ladite structure de renforcement comportant des fils disposés sensiblement parallèlement les uns par rapport aux autres, ledit appareil étant destiné à être utilisé en coopération avec une forme (1) sensiblement toroïdale sur laquelle on construit progressivement ladite structure de renforcement en déposant côte à côte des arceaux dudit fil selon une trajectoire souhaitée pour ledit fil à la surface de ladite forme,
ledit appareil comprenant :
• un couloir de guidage pour guider un groupe de fils (2) rassemblés en une bandelette (20),
• une tête de pose (4) de ladite bandelette, comportant un bâti (40) de référence par rapport auquel on peut installer ladite forme à une position connue, la tête de pose comportant un couloir de guidage de la bandelette et un dispositif de rouletage (49) destiné à coopérer avec ladite forme, la tête de pose comportant au moins un actionneur pour guider ladite tête par rapport au bâti de référence,
• un organe de coupe (48) de la bandelette disposé entre le dispositif de déroulage et la tête de pose,
• un mécanisme de retournement de la bandelette autour de son axe longitudinal permettant d'inverser la face de la bandelette qui est amenée au contact de la forme par la tête de pose.

2. Appareil selon la revendication 1, comprenant un assembleur (5) comportant une chambre de formation (50) de ladite bandelette, l'assembleur (5) comportant un orifice d'entrée pour recevoir les fils, un orifice d'alimentation pour introduire une composition élastomérique, un orifice de sortie de la bandelette comprenant les fils réunis par ladite composition.

3. Appareil selon la revendication 2, comprenant un dispositif de refoulement volumétrique de ladite composition à l'intérieur de la chambre.

4. Appareil selon la revendication 3, comportant une unité de contrôle du mouvement de rotation de la forme, du mouvement de la tête de pose par rapport à la forme (1) et du dispositif de refoulement, ladite unité étant configurée de façon à ce que la quantité, par unité de longueur de bandelette, de composition engagée à l'intérieur de la chambre de formation par le dispositif de refoulement, soit fonction de la position occupée par ladite unité de longueur de bandelette pendant sa dépose sur la forme.

5. Appareil selon la revendication 1, comportant une unité de contrôle du mouvement de rotation de la forme, du mouvement de la tête de pose par rapport à la forme et du dispositif de refoulement, ladite unité étant configurée de façon à ce que le volume, par unité de longueur de bandelette, de composition engagé à l'intérieur de la chambre de formation par le dispositif de refoulement, soit fonction du volume occupé par ladite unité de longueur de bandelette après sa dépose sur la forme.

6. Appareil selon la revendication 1, comportant une zone de compensation de longueur de bandelette, disposé entre l'assembleur (5) et la tête de pose (4).

## Claims

1. Apparatus for fabricating a reinforcement structure for a tyre, the said reinforcement structure comprising threads disposed substantially parallel to each other, the said apparatus being intended to be used in cooperation with a substantially toroidal form (1) on which the said reinforcement structure is progressively constructed by depositing arches of the said thread side by side along a desired trajectory for the said thread on the surface of the said form,
the said apparatus comprising:
• a guidance passage for guiding a group of threads (2) collected together in a strip (20),
• a head (4) for laying the said strip, comprising a reference framework (40) with respect to which it is possible to install the said form at a known position, the laying head comprising a guidance passage for the strip and a rolling-down device (49) intended to cooperate with the said form, the laying head comprising at least one actuator for guiding the said head with respect to the reference framework,
• a member (48) for cutting the strip disposed between the pay-off device and the laying head,
• a mechanism for turning over the strip around its longitudinal axis allowing to invert the face of the strip which is brought in contact with the form by the laying head.

2. Apparatus according to Claim 1, comprising an assembler (5) comprising a chamber (50) for forming the said strip, the assembler (5) comprising an entry orifice for receiving the threads, a feed orifice for introducing an elastomer composition, and an outlet orifice for the strip comprising the threads joined by the said composition.

3. Apparatus according to Claim 2, comprising a delivery device for the volumetric delivery of the said composition inside the chamber.

4. Apparatus according to Claim 3, comprising a unit for controlling the rotation movement of the form, the movement of the laying head with respect to the form (1), and the delivery device, the said unit being configured so that the quantity, per unit length of strip, of composition inserted inside the formation chamber by the delivery device is a function of the position occupied by the said unit of length of strip during its deposition on the form.

5. Apparatus according to Claim 1, comprising a unit for controlling the rotation movement of the form, the movement of the laying head with respect to the form, and the delivery device, the said unit being configured so that the volume, per unit length of strip, of composition inserted inside the formation chamber by the delivery device is a function of the volume occupied by the said unit of length of the strip after its deposition on the form.

6. Apparatus according to Claim 1, comprising a strip length compensation area, disposed between the assembler (5) and the laying head (4).

## Patentansprüche

1. Vorrichtung zur Herstellung einer Verstärkungsstruktur für Reifen, wobei die Verstärkungsstruktur überwiegend parallel zueinander verlaufende Fäden aufweist, die Vorrichtung zum Einsatz in Zusammenarbeit mit einem überwiegend toroidalen Formkörper (1) bestimmt ist, auf dem die Verstärkungsstruktur durch Aufbringen von nebeneinander angeordneten, aus dem Faden gebildeten Bögen nach einem für den Faden erwünschten Verlauf an der Oberfläche des Formkörpers schrittweise aufgebaut wird, mit:
• einer Führungsbahn zum Führen einer Gruppe von zu einem Streifen (20) zusammengesetzten Fäden (2),
• einem Streifen-Ablegekopf (4) bestehend aus einem Bezugsrahmen (40) zu dem der Formkörper in bekannter Weise positioniert werden kann, wobei der Ablegekopf eine Streifen-Führungsbahn und eine mit dem Formkörper zusammenwirkende Belegvorrichtung (49) umfasst, wobei der Ablegekopf mindestens ein Stellglied zum Führen des Kopfes zum Bezugsrahmen aufweist,
• einer zwischen der Abrollvorrichtung und dem Ablegekopf angeordneten Streifenschneideeinrichtung,
• einem Streifendrehmechanismus zum Drehen des Streifens um seine Längsachse, wodurch die Seite des Streifens, die von dem Ablegekopf mit dem Formkörper in Berührung gebracht wird, gewendet werden kann.

2. Vorrichtung nach Anspruch 1 mit einem Konfektionierer (5) mit einer Streifenformkammer (50), wobei der Konfektionierer (5) eine Eingangsöffnung zum Einführen der Fäden, eine Zuführöffnung zum Zuführen einer Elastomermischung und eine Ausgangsöffnung für den Streifen aufweist, der aus den durch die Mischung zusammengefügten Fäden besteht.

3. Vorrichtung nach Anspruch 2 mit einer volumetrischen Fördervorrichtung zum Fördern der Mischung in das Innere der Kammer.

4. Vorrichtung nach Anspruch 3 mit einer Kontrolleinheit zur Kontrolle der Drehbewegung des Formkörpers, der Bewegung des Ablegekopfes zum Formkörper (1) und der Fördervorrichtung, wobei die Kontrolleinheit so ausgelegt ist, dass die pro Streifenlänge durch die Fördervorrichtung ins Innere der Formkammer beförderte Mischungsmenge von der Stellung abhängt, die von der Streifenlängeneinheit während des Ablegens auf dem Formkörper eingenommen wird.

5. Vorrichtung nach Anspruch 1 mit einer Kontrolleinheit zur Kontrolle der Drehbewegung des Formkörpers, der Bewegung des Ablegekopfes zum Formkörper und der Fördervorrichtung, wobei die Kontrolleinheit so ausgelegt ist, dass das pro Streifenlänge durch die Fördervorrichtung ins Innere der Formkammer beförderte Mischungsvolumen von dem Volumen abhängt, das von der Streifenlängeneinheit nach dem Ablegen auf dem Formkörper eingenommen wird.

6. Vorrichtung nach Anspruch 1 mit einem zwischen dem Konfektionierer (5) und dem Ablegekopf (4) angeordneten Streifenlängenausgleichsbereich.
